Europäisches Patentamt

European Patent Office

Office européen des brevets

(19)

(11) **EP 0 459 968 B1**

(12) **FASCICULE DE BREVET EUROPEEN**

(45) Date de publication et mention
de la délivrance du brevet:
**13.03.1996 Bulletin 1996/11**

(51) Int Cl.⁶: **H04L 27/22**

(21) Numéro de dépôt: **91870082.4**

(22) Date de dépôt: **17.05.1991**

(54) **Démodulateur numérique pour signal modulé par déplacement de phase à plusieurs états**

Digitaler Demodulator für mehrphasenmodulierte Signale

Digital demodulator for multi-phase shift keyed signals

(84) Etats contractants désignés:
**CH DE ES GB IT LI SE**

(30) Priorité: **29.05.1990 FR 9006646**

(43) Date de publication de la demande:
**04.12.1991 Bulletin 1991/49**

(73) Titulaire: **AGENCE SPATIALE EUROPEENNE**
**F-75738 Paris Cedex 15 (FR)**

(72) Inventeur: **Zarembowitch, Alain**
**Katwijk (NL)**

(74) Mandataire: **Vanderperre, Robert et al**
**Bureau Vander Haeghen S.A.**
**Rue Colonel Bourg 108 A**
**B-1040 Bruxelles (BE)**

(56) Documents cités:
**NL-A- 124 187**

## Description

La présente invention concerne un nouveau circuit pour démoduler des signaux modulés par déplacement de phase à $\underline{m}$ états (m-MDP).

La modulation par déplacement de phase (MDP) est largement utilisée pour transmettre des données binaires au moyen de liaisons de communications telles que les liaisons hyperfréquences terrestres et par satellite et les liaisons entre ordinateurs. Le circuit de démodulation imposé par ce type de modulation contribue dans une large mesure à la complexité générale des équipements de réception. De plus, il est largement reconnu que la technologie numérique est préférable à la technologie analogique pour ce qui concerne l'insensibilité des performances à l'environnement, la reproductibilité des performances, le coût de production, le niveau d'intégration et la fiabilité. C'est pourquoi un circuit de démodulation entièrement numérique est souhaitable pour démoduler des signaux modulés par déplacement de phase.

Des circuits de démodulation numériques ont certes déjà été réalisés dans le passé. Toutefois les techniques utilisées jusqu'à présent présentent une contrainte capitale : la cadence d'échantillonnage et la fréquence d'horloge des circuits numériques synchrones doivent être d'au moins un ordre de grandeur (habituellement seize à trente-deux fois) plus grandes que le débit des symboles à démoduler. Inversement, le débit de symboles maximum qui peut être obtenu avec un circuit de démodulation numérique est d'au moins un ordre de grandeur plus petit que la cadence maximale des signaux d'horloge réalisable par une technologie donnée (CMOS, ECL, etc...). En pratique, ce type de démodulateur entièrement numérique est utilisé pour des signaux de données à débit lent. Des signaux de données à débit rapide nécessitaient des circuits de démodulation partiellement ou entièrement analogiques.

Les démodulateurs connus pour signaux modulés par déplacement de phase comprennent essentiellement un circuit d'échantillonnage et de quantification pour échantillonner et quantifier le signal analogique et un circuit de reconstruction de la porteuse pour reconstruire la porteuse devant servir à démoduler le signal reçu. Les démodulateurs connus peuvent être rangés en deux catégories.

La première catégorie comprend les démodulateurs qui traitent des signaux d'entrée ayant une fréquence centrale plus grande que le débit des symboles de modulation (voir W.M. Waters et B.R. Jarrett, Bandpass Signal Sampling and Coherent Detection, IEEE Transactions on Aerospace and Electronic Systems, Vol. AES-18, No. 4, Novembre 1982). Une quantification à un bit du signal à fréquence intermédiaire est compatible avec de faibles pertes de démodulation pourvu que la fréquence d'échantillonnage soit au moins un ordre de grandeur plus grande que la fréquence porteuse. Ce type de démodulateur ne nécessite pas de réglage automatique du gain et met en oeuvre une boucle de poursuite de la porteuse entièrement numérique, laquelle boucle reconstruit la porteuse en ajoutant ou en sautant des cycles de l'horloge-mère. Le rapport de la fréquence d'horloge-mère au débit des symboles de modulation détermine la résolution de phase de la boucle de poursuite de porteuse et affecte par conséquent les pertes de démodulation. Un rapport de trente-deux donne lieu à une erreur de phase de porteuse qui atteint 11 degrés. Bien que le circuit soit simple de réalisation, sa limitation majeure réside dans le fait qu'il nécessite une horloge-mère plusieurs fois plus rapide que le débit des symboles de modulation.

La seconde catégorie de démodulateurs numériques comprend les démodulateurs qui traitent les composantes en phase I et en quadrature Q des signaux d'entrée en bande de base (voir Dr. Kamilo Feher, Digital Communications, Satellite/Earth Station Enigneering, Prentice-Hall Inc., 1983, pages 162-169). La principale limitation de ce type de démodulateur est qu'il doit comprendre des circuits analogiques externes tels que oscillateurs commandés en tension et amplificateurs commandés en gain. De plus, ces circuits externes ont besoin de signaux de commande analogiques et requièrent donc des circuits de conversion numérique-analogique.

Le but de la présente invention est de proposer un démodulateur numérique pour démoduler des signaux modulés par déplacement de phase, capable de travailler à une vitesse d'horloge qui n'est pas supérieure au débit de symboles de modulation sans nécessiter de circuits extérieurs ni pour le contrôle automatique de gain (CAG) ni pour le verrouillage de phase de la porteuse.

Conformément à l'invention, il est proposé un démodulateur numérique tel que défini dans les revendications. Ce démodulateur numérique comprend un circuit d'échantillonnage et de quantification pour échantillonner et quantifier la composante en phase et la composante en quadrature de phase du signal analogique modulé d'entrée et un circuit de reconstruction de la porteuse pour reconstruire la porteuse servant à démoduler le signal d'entrée. Le circuit d'échantillonnage et de quantification comprend plusieurs étages de quantification d'amplitude recevant la composante en phase du signal d'entrée et un ensemble de tensions de seuils différentes et plusieurs étages de quantification de phase recevant la composante en quadrature de phase du signal d'entrée et un ensemble identique de tensions de seuils différentes. Il comprend en outre un circuit de logique combinatoire pour convertir, une fois par période du signal d'horloge, les valeurs quantifiées des composantes en phase et en quadrature de phase en deux valeurs entières en coordonnées polaires, associées bijectivement à chaque ensemble de valeurs quantifiées, et un circuit de réglage pour comparer un signal binaire représentant la valeur quantifiée d'amplitude avec une valeur d'amplitude de référence et pour produire un signal de sortie servant au réglage dynamique des seuils de quantification.

Un mode de réalisation exemplaire du circuit d'échantillonnage et de quantification comprend deux quantificateurs ayant plusieurs étages de quantification d'amplitude, chaque étage du premier quantificateur recevant la composante en phase du signal d'entrée et une tension de seuil différente, et chaque étage du deuxième quantificateur recevant la composante en quadrature de phase du signal d'entrée et une tension de seuil différente.

Dans le démodulateur numérique selon l'invention, le nombre d'étages de quantification d'amplitude est d'au moins trente-deux, le nombre de seuils de quantification d'amplitude est d'au moins seize et le nombre d'étages de quantification de phase est d'au moins soixante-quatre. Le nombre d'étages de quantification de phase est un multiple de quatre.

Le démodulateur numérique conforme à l'invention se distingue par les avantages suivants :

1) une quantification uniforme de la phase du signal modulé d'entrée est réalisée par une quantification non uniforme de l'amplitude de chacune des composantes I et Q;
2) le contrôle automatique du gain est réalisé par un réglage dynamique des seuils de quantification;
3) les seuils de quantification pour les deux composantes I et Q du signal d'entrée sont engendrés par un réseau résistif unique et commun;
4) l'échantillonnage se fait à une vitesse faible de l'ordre d'un échantillon par symbole de modulation en mode poursuite;
5) les échantillons de phase quantifiés sont traités entièrement en technologie numérique par des organes fonctionnels élémentaires (compteurs, comparateurs, additionneurs);
6) l'horloge-mère (qui détermine aussi bien le rythme d'échantillonnage que celui de traitement numérique du signal) peut être générée par un contrôle dynamique d'une des versions déphasées d'un oscillateur local à fréquence fixe et ce contrôle dynamique du déphasage entre l'horloge-mère et l'oscillateur local peut être réalisé par un circuit de récupération du rythme des symboles;
7) deux quantificateurs à quatre bits permettent d'obtenir une perte de démodulation inférieure à 0,5 dB sur la gamme de taux d'erreur binaire de 10$^{-2}$ à 10$^{-5}$.

De plus, le circuit proposé se prête à une réalisation compacte sous la forme de circuit numérique à haute densité d'intégration (VLSI).

L'invention est exposée en détail dans ce qui suit à l'aide des dessins joints.

La figure 1 est un schéma par blocs du démodulateur numérique selon l'invention.

La figure 2 est un schéma par blocs d'un mode de réalisation exemplaire de l'échantillonneur et quantificateur de phase selon l'invention.

La figure 3 est un diagramme illustrant le processus de quantification mis en oeuvre dans le démodulateur selon l'invention.

La figure 4 est un schéma par blocs illustrant le processus de reconstruction de la porteuse mis en oeuvre dans un démodulateur exemplaire conforme à l'invention.

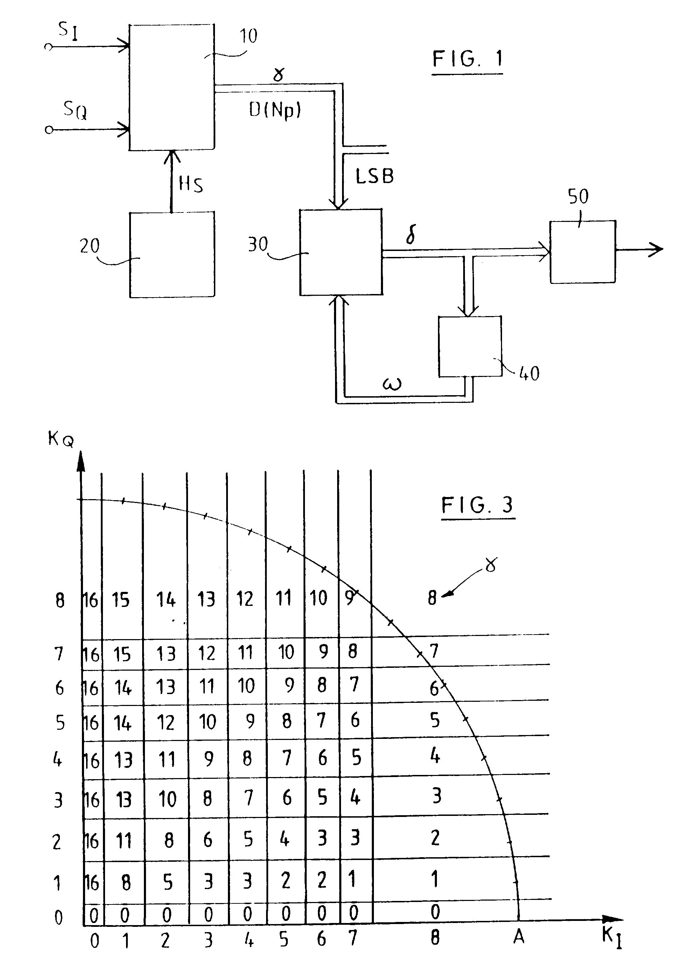

Se reportant à la figure 1, le démodulateur numérique selon l'invention comprend un circuit d'échantillonnage et de quantification de phase 10 recevant les signaux analogiques $S_I$ et $S_Q$ qui sont les composantes en phase et en quadrature de phase du signal obtenu par amplification, filtrage et transposition de fréquence du signal modulé reçu. La fréquence centrale des signaux d'entrée est la fréquence $f_c$.

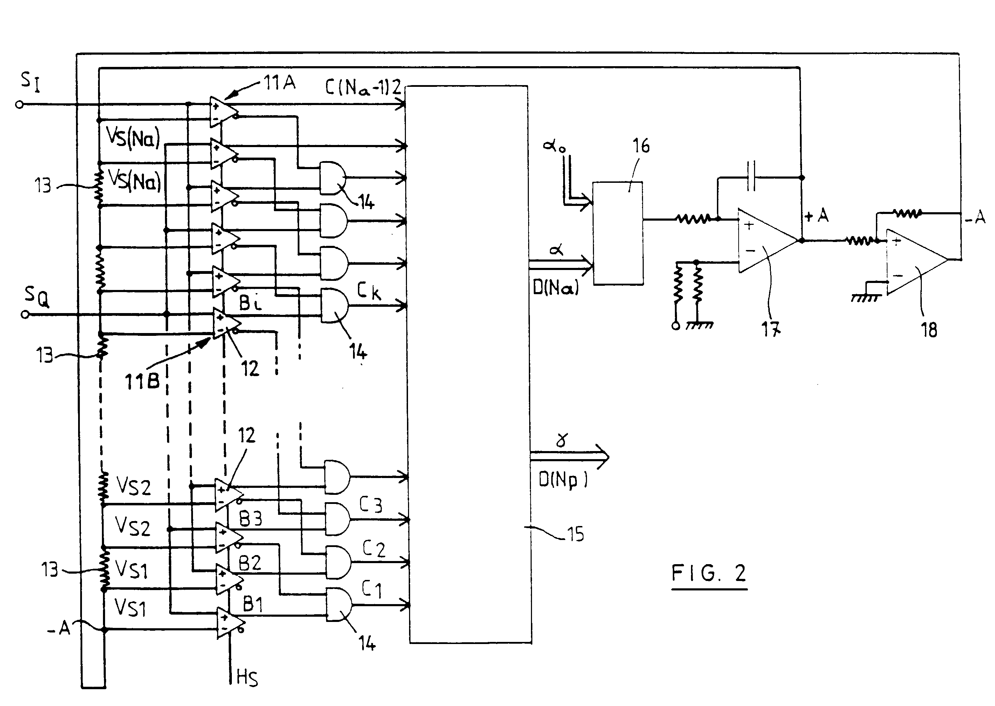

Un mode de réalisation exemplaire du circuit d'échantillonnage et de quantification 10 est illustré à la figure 2. Le signal $S_I$ est appliqué à une entrée de plusieurs étages d'un premier quantificateur 11A tandis que le signal $S_Q$ est appliqué à une entrée de plusieurs étages d'un second quantificateur 11B.

Chaque étage de chacun des quantificateurs est constitué d'un comparateur 12. L'entrée positive du comparateur est connectée pour recevoir la tension d'entrée $S_I$ ou $S_Q$ et son entrée négative est connectée pour recevoir une tension de seuil Vsi différente.

Chaque comparateur 12 produit un signal de sortie à l'état haut si et seulement si la tension appliquée à son entrée positive est plus grande que la tension de seuil appliquée à son entrée négative. Dans le cas contraire, le signal de sortie est un état bas. On désignera par Bi le signal de sortie du comparateur de l'étage i.

Le signal de sortie Bi de chaque comparateur à partir de l'étage ayant la tension de seuil la plus basse et le signal de sortie inversé $\overline{Bi+1}$ du comparateur de l'étage suivant sont combinés dans un circuit-ET 14 qui produit un signal Ci représentant le produit logique Ci = $Bi.ET.\overline{Bi+1}$. En outre, le signal logique C(Na-1)/2 de l'étage supérieur est égal au signal de sortie du comparateur de t'étage supérieur. De cette manière, à tout moment un signal logique Ck et un seul est un état haut tandis que tous les autres sont des états bas. Le nombre entier K dans la suite de l'exposé désignera la valeur quantifiée du signal d'entrée analogique.

Les caractéristiques de transfert des deux quantificateurs sont identiques : les seuils non uniformes de la tension d'entrée sont fixés par la relation suivante :

Vsi = 0,5 * A * (sin(2π i/Np) + sn(2π (i+1)/Np))

pour i = -(Na-1)/2, -(Na-1)/2+1, ...-1, 0, 1, 2, ... ...(Na-1)/2

où Na est le nombre impair d'étages de quantification
A est un signal de mise en échelle
Np est le nombre voulu d'étages de quantification de phase et est lié à Na par la relation Np = 4(Na-1).

De cette manière, les seuils Vsi se trouvent placés exactement au milieu entre les projections respectives sur un axe cartésien, de deux étages de quantification de phase successifs Pi = i * 2π/Np et Pi+1. Il faut noter que seuls les états de phase quantifiés dont la projection sur un axe cartésien est plus petite que sin( π /4) en valeur absolue se trouvent séparés par des seuils de tension sur ledit axe. Ainsi, chaque état de phase quantifié sur le cercle de rayon A dans le plan complexe est affecté à une paire unique d'états d'amplitude quantifiés sur les canaux en phase et en quadrature de phase.

Etant donné que les deux quantificateurs 11A et 11B ont des caractéristiques de transfert identiques, chaque quantificateur requiert un ensemble identique de tensions de seuils Vsi non uniformes. Dans le montage exemplaire de la figure 2, les (Na-1) seuils de tension de quantification Vsi sont engendrés par un diviseur de tension comprenant (Na-2) résistances 13 connectées en série. Les tensions appliquées aux deux extrémités du diviseur de tension sont +A et -A.

Au cours du processus de quantification, l'échantillonnage se fait en synchronisme avec des signaux d'horloge d'échantillonnage $H_S$ engendrés, mis en format et déphasés de façon convenable par un circuit de commande de cadence approprié 20.

Les valeurs quantifiées et échantillonnées respectives $K_I$ et $K_Q$ des signaux analogiques $S_I$ et $S_Q$ sont synchronisées avec les signaux d'horloge Hs.

Une fois par période des signaux d'horloge Hs, un circuit de logique combinatoire 15 effectue sur les valeurs $K_I$ et $K_Q$ une conversion de coordonnées cartésiennes en coordonnées polaires. Ce circuit produit deux valeurs entières alpha ($\alpha$) et gamma ($\gamma$) associées bijectivement à chaque ensemble de valeurs quantifiées $K_I$ et $K_Q$. L'amplitude $\alpha$ est la somme des valeurs absolues de $K_I$ et $K_Q$. La valeur d'amplitude $\alpha$ est représentée par un mot binaire de D(Na) bits et la valeur de phase $\gamma$ est représentée par un mot binaire de D(Np) bits. Les nombres D(n) sont les nombres minima de bits nécessaires pour représenter n̲ valeurs distinctes.

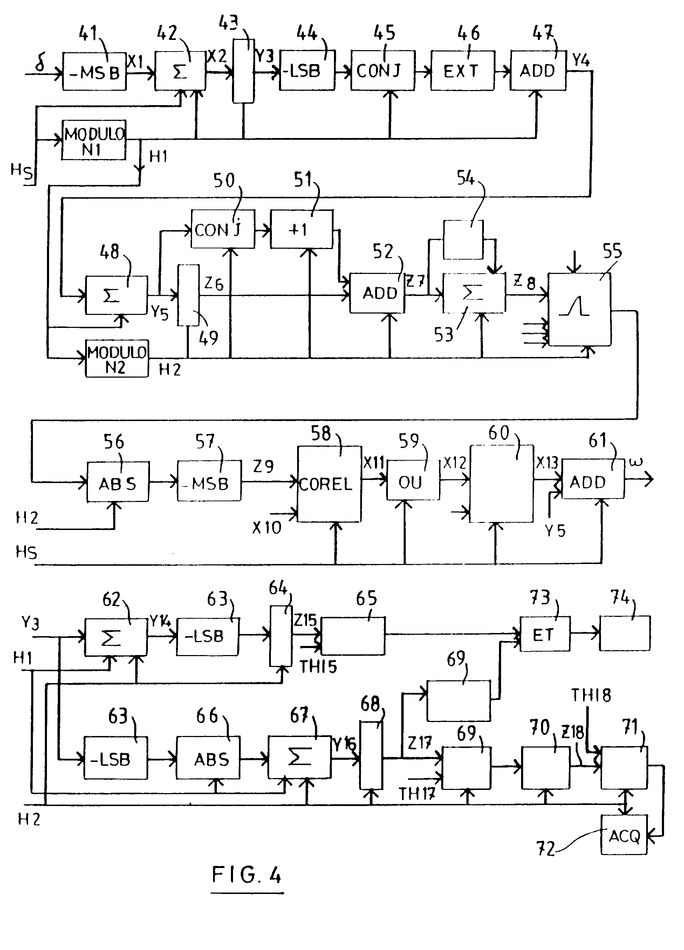

La valeur de phase $\gamma$ est déterminée en considérant le cercle de rayon A dans le plan complexe. Le plan complexe est divisé en Na² surfaces rectangulaires (voir figure 3), et chaque surface élémentaire est identifiée par deux valeurs d'amplitude $K_I$ et $K_Q$. A chaque point (x,y) en coordonnées cartésiennes dans une surface élémentaire donnée correspond une phase en coordonnées polaires et à cette surface élémentaire correspond une phase moyenne. Les Np étages de quantification de phase sont répartis uniformément le long de la circonférence. Alors, la valeur de phase entière $\gamma$ associée à une surface élémentaire donnée ($K_I$, $K_Q$) est définie par l'indice i de l'état de phase quantifié $P_i$ le plus proche de la phase moyenne sur la surface élémentaire considérée.

La valeur $\gamma$ est une valeur entière comprise entre O et Np-1. La sélection des seuils de quantification Vsi définis précédemment assure qu'à chaque état de phase quantifié Pi sur le cercle d'amplitude A dans le plan complexe correspond une paire de valeurs d'amplitude ($K_I$,

$K_Q$) unique.

Le mot binaire d'amplitude $\alpha$ est appliqué à une entrée d'un comparateur 16 dans lequel il est comparé avec un mot d'amplitude de référence $\alpha$o. Le comparateur 16 est agencé pour produire un signal de sortie qui a un état haut lorsque $\alpha$ est inférieur à $\alpha$o, un état bas lorsque $\alpha$ est supérieur à $\alpha$o et peut produire indistinctement un état haut ou bas en cas d'égalité. Ce signal de sortie est comparé ensuite à la tension moyenne entre les états logiques "haut" et "bas", inversé et intégré dans l'intégrateur 17. La constante de temps d'intégration est déterminée par le produit R * C. La sortie +A de l'intégrateur 17 sert de tension supérieure applique au diviseur de tension 13. La sortie de l'intégrateur 17 est également appliquée à un inverseur 18 à gain unitaire qui engendre la tension inverse -A, celle-ci étant utilisée comme tension inférieure pour le diviseur de tension 13.

Lorsque l'amplitude du signal d'entrée est plus petite que A, le nombre $\alpha$ est plus petit que $\alpha$o et l'entrée de l'intégrateur 17 est positive. En conséquence, le signal de sortie A décroît par suite de l'effet d'inversion, ce qui tend à réduire la différence entre la valeur absolue du signal d'entrée S et la valeur A.

Dans le cas exemplaire d'un quantificateur de phase à soixante-quatre étages (Np = 64), le nombre digital $\alpha$ comprend cinq bits. Une valeur typique pour $\alpha$o est alors 12,0. La constante de temps RC de la boucle de CAG est un paramètre du système, qui est sélectionné pour assurer un compromis satisfaisant entre une vitesse d'acquisition rapide de la boucle de CAG et un filtrage maximum du bruit affectant le signal d'entrée.

De fait, le circuit en boucle joue le rôle d'un régulateur automatique du gain. Au lieu de régler le gain d'amplification des signaux d'entrée $S_I$ et $S_Q$ ainsi qu'il est courant dans les circuits de réglage automatique du gain connus, te circuit conforme à l'invention réalise un réglage dynamique des tensions de seuils de quantification Vsi. Ce circuit peut avantageusement être réalisé sous forme intégrée, il évite la nécessité d'un circuit de réglage externe et il minimise l'effet d'une inégalité de gain entre les amplificateurs recevant les composantes en phase et en quadrature du signal car les tensions de seuils de quantification Vsi sont communes aux deux quantificateurs 11A et 11B.

Le circuit de quantification selon l'invention réalise approximativement un échantillonnage et une quantification uniformes de la phase modulo-2 π du signal d'entrée. Lorsque le signal d'entrée consiste en un signal de la forme S = A cos ($\delta$(t)), ce qui est le cas d'un signal modulé en MDP exempt de bruit, il existe une équivalence exacte entre la quantification de phase uniforme voulue et le circuit selon l'invention, qui comprend deux quantificateurs à quantification d'amplitude non linéaire.

Le nombre Np d'étages de quantification de phase est un paramètre de construction du circuit. L'invention requiert que ce nombre soit un multiple de quatre. Le nombre d'étages de quantification de phase joue un rôle important dans les pertes globales du démodulateur.

Dans le cas particulier de la modulation MPD4 (MDP-4), des pertes inférieures à 0,5 dB peuvent être obtenues lorsque le nombre d'étages de quantification est supérieur ou égal à soixante-quatre. De façon équivalente, il faut que le nombre de comparateurs de tension soit d'au moins trente-deux et le nombre de seuils de quantification soit d'au moins seize pour que les pertes de réalisation soit maintenues en dessous de 0,5 dB.

A titre d'exemple, on considérera un quantificateur de phase comptant soixante-quatre étages et un signal d'entrée d'amplitude A. Les dix-sept niveaux de quantification sont définis comme suit :

| Sorties | Entrées |
|---------|---------|
| K = -8 | S<-A * 0.67075 |
| K = -7 | -A * 0.67075<S< -A * 0.59498 |
| K = -6 | -A * 0.59498<S< -A * 0.51348 |
| K = -5 | -A * 0.51348<S< -A * 0.42704 |
| K = -4 | -A * 0.42704<S< -A * 0.33648 |
| K = -3 | -A * 0.33648<S< -A * 0.24269 |
| K = -2 | -A * 0.24269<S< -A * 0.14655 |
| K = -1 | -A * 0.14655<S< -A * 0.04901 |
| K = 0 | -A * 0.04901<S< -A * 0.04901 |
| K = 1 | +A * 0.04901<S< -A * 0.14655 |
| K = 2 | +A * 0.14655<S< -A * 0.24269 |
| K = 3 | +A * 0.24269<S< -A * 0.33648 |
| K = 4 | +A * 0.33648<S< -A * 0.42704 |
| K = 5 | +A * 0.42704<S< -A * 0.51348 |
| K = 6 | +A * 0.51348<S< -A * 0.59498 |
| K = 7 | +A * 0.59498<S< -A * 0.67075 |
| K = 8 | +A * 0.67075<S |

Dans le tableau ci-dessus, les valeurs de seuils ont été arrondies au cinquième chiffre pour la clarté. La phase quantifiée est une fonction bijective des coordonnées $(K_I, K_Q)$ comme l'illustre le diagramme de la figure 3.

Revenant au schéma général du démodulateur selon l'invention (figure 1), le mot binaire de phase $\gamma$ représentant la phase quantifiée est complété avec des bits à l'état "bas" du côté de la position binaire de plus faible poids pour assurer une plus grande précision du décalage de phase subséquent. Le mot résultant $\gamma'$ comprenant D(Np') bits est introduit dans un circuit déphaseur 30 dans lequel il est additionné à un mot déphasé de correction de phase oméga ($\omega$) produit une fois par période d'horloge Hs à la sortie d'un circuit de reconstruction de la porteuse qui sera décrit plus loin. A la sortie du circuit 30 est obtenu un mot binaire delta ($\delta$). Les mots $\gamma'$, $\omega$ et $\delta$ ont la même représentation : ils sont des entiers positifs prenant des valeurs k comprises entre 0 et Np'-1, et représentant les états quantifiés de phase k * 2π/Np.

De fait, le circuit numérique 30 effectue l'addition modulo-2π de la phase du signal d'entrée, représentée par le mot $\gamma'$ et du déphasage représenté par le mot $\omega$. Sa fonction est de ramener le signal d'entrée de sa fréquence centrale $f_c$ dans la bande de base. Ce dispositif s'accomode aussi bien de déphasages positifs que de déphasages négatifs. Un déphasage négatif -v est représenté par son équivalent positif modulo-2π, soit k * 2π-v, où k est l'entier le plus petit pour lequel k * 2π -v devient positif.

Le mot $\delta$ obtenu à la sortie du circuit déphaseur 30 représente les échantillons quantifiés de la phase du signal reçu et après déphasage. Les données démodulées sont contenues dans les D(m) bits de plus fort poids du mot $\delta$. Les bits restants servent à donner une estimation de l'erreur de phase ainsi qu'il sera expliqué plus loin.

Les mots à successifs représentant les échantillons quantifiés de la phase du signal reçu sont appliqués à un circuit de reconstruction de la porteuse 40. La fonction de ce dernier circuit est celle d'un circuit de reconstruction de porteuse classique et dépend du mode d'opération :

- en mode acquisition, le circuit 40 recherche la présence d'un signal modulé dans le signal bruité reçu.

   Pour ce faire, il déplace la fréquence centrale du récepteur entre deux fréquences extrêmes fmin et fmax par pas de fréquences $f_s$. La forme d'onde du balayage de fréquence comprend une succession de rampes de fréquences linéaires. Lorsqu'un signal modulé se trouve détecté, le circuit 40 se reconfigure automatiquement pour passer du mode acquisition au mode poursuite;

- en mode poursuite, le circuit 40 estime et reconstruit la phase de la porteuse du signal modulé. Il produit alors une suite de mots déphasés $\omega$ qui représentent l'opposé de la phase de la porteuse reconstruite. Cette suite de mots $\omega$ est utilisée pour commander le déphaseur numérique 30 précité. Les fonctions combinées du déphaseur 30 et du circuit de reconstruction de porteuse 40 réalisent une boucle de verrouillage de phase numérique. Le circuit de reconsde porteuse évalue de manière continue si la boucle est verrouillée ou non et il fournit l'erreur de phase estimée pour chaque symbole. Cette erreur de phase estimée est une mesure du degré de fiabilité des données démodulées ou, en d'autres mots du degré de confiance que l'on peut accorder aux données démodulées. En cas de perte de verrouillage persistant, le circuit se reconfigure automatiquement pour repasser en mode acquisition.

Il est à remarquer que la spécificité du circuit de reconstruction de porteuse selon l'invention ne réside pas dans sa fonction mais dans le processus de traitement des données qu'il met en oeuvre. Ce processus de traitement entièrement numérique, conforme à l'invention, est illustré par le schéma par blocs de la figure 4.

Au cours de ce processus de traitement se trouvent produits trois ensembles de mots binaires identifiés respectivement par les symboles X, Y et Z. Les mots binaires Xi sont mis à jour une fois par période du signal d'horloge-mère Hs. Les mots binaires Yi sont mis à jour une fois par période d'un signal d'horloge H1 obtenu par division de la fréquence de l'horloge-mère par N1. Le paramètre N1 est une constante d'intégration des échantillons quantifiés de la phase du signal reçu. Les mots binaires Zi sont mis à jour une fois par période d'un signal d'horloge H2 obtenu par division de la fréquence du signal H1 par N2. Le paramètre N2 est une constante d'intégration utilisée dans le processus de poursuite de la fréquence.

Une fois par période du signal d'horloge Hs le mot $\delta$ est tronqué de plusieurs de ses bits de plus fort poids MSB (étape 41). Le nombre de bits supprimés dépend du nombre d'états de phase de modulation, doit D(m̲) bits dans le cas d'une modulation par déplacement de phase à m̲ états.

N1 échantillons successifs du mot X1 résultant sont accumulés (étape 42) et le résultat est mémorisé dans le mot X2. Le nombre N1 est un paramètre du système de traitement et est de préférence égal à une puissance de deux. Lorsque le mot X2 est complet, il se trouve mémorisé dans le mot Y3 (étape 43). Le mot Y3 représente la correction de phase moyenne.

Une fois par période du signal d'horloge H1, le mot Y3 est traité pour produire un mot Y5 représentant la correction de phase cumulée au cours d'une procédure de poursuite en réponse à une erreur de phase. Le mot Y5 est obtenu au moyen des opérations suivantes :

Bloc 44:    le mot Y3 est tronqué d'un nombre D(N1) de bits de plus faible poids LSB.
Bloc 45:    les bits restants de Y3 sont conjugués.
Bloc 46:    la longueur du mot résultant est étendue à l'aide de D(m) bits 0 en positions binaires de plus faible poids.
Bloc 47:    addition d'une valeur constante 1 + 7Np'/8 pour produire un mot Y4.
Bloc 48:    accumulation du mot Y4 depuis le début du mode poursuite pour produire le mot Y5.

Le mot de correction de phase cumulée Y5 est une des composantes du mot de correction de phase $\omega$ utilisé dans le déphaseur numérique 30. La seconde composante du mot de correction de phase $\omega$ est un mot X13 représentant la correction de phase cumulée depuis le début d'une procédure de poursuite en réponse à une erreur de fréquence. Le mot X13 est obtenu à l'aide des opérations suivantes :

Bloc 49 :    Accumulation du mot Y5 une fois par période du signal d'horloge H2 pour produire un mot Z6.
Bloc 50 :    Conjugaison des bits du mot Y5.
Bloc 51 :    Addition d'une unité.
Bloc 52 :    Addition de Y5 et de Z6 et production d'un mot Z7.

Bloc 53 :    Accumulation du mot Z7 dans le mot Z8 représentant une estimation de la fréquence porteuse.
Bloc 54 :    Génération d'un signal de validation si la valeur absolue de Z7 est supérieure a un seuil TH7.
Bloc 55 :    Génération d'une rampe de tension.
Bloc 56 :    Formation et mémorisation de la valeur absolue de Z8.
Bloc 57 :    Elimination des bits de plus fort poids MSB et production d'un mot Z9.
Bloc 58:    Processus de corrélation sur les bits de X11.
Bloc 59:    Fonction OU sur les bits de X11.
Bloc 60:    Comptage progressif/dégressif et production du mot de correction de phase X13.
     Si X12 est 1 et le bit de plus fort poids de Z8 est 1, X13 diminue d'une unité.

Les mots de correction de phase X13 et Y5 sont additionnés (étape 61) pour générer le mot de correction de phase $\omega$ destiné au contrôle du déphaseur 30.

D'autre part, le mot binaire Y3 qui représente la correction de phase moyenne est également utilisé pour contrôler le mode de fonctionnement du système à l'aide des opérations suivantes :

Bloc 62:    Accumulation de N2 échantillons de Y3 à la cadence d'une fois par période du signal d'horloge H1.
Bloc 63:    Elimination de quelques bits de plus faible poids LSB pour simplifier les circuits.
Bloc 64:    Mémorisation du mot Z15 représentant une mesure de l'erreur de phase moyenne sur N1 N2 échantillons du signal d'entrée.
Bloc 65:    Comparaison avec un seuil TH15.
Bloc 66:    Obtention de la valeur absolue des Ni échantillons de Y3.
Bloc 67 :    Accumulation des échantillons de Y3 dans le mot Y16.
Bloc 68 :    Mémorisation et génération du mot Z17 représentant une mesure de l'écart normal de l'erreur de phase.
Bloc 69 :    Comparaison avec un seuil TH17.
Bloc 70 :    Comptage Z18.
     Si Z17 est supérieur à TH17, Z18 augmente de 1, sinon Z18 est remis à 0.
     Z18 indique le nombre de périodes d'horloge H2 successives de la séquence de détection.
Bloc 71 :    Comparaison de Z18 avec un seuil TH18.
     Si Z18 est supérieur à TH18, la détection de phase est satisfaisante et le système se reconfigure automatiquement en mode acquisition.
Bloc 72 :    Commutation en mode Acquisition.
Bloc 73 :    Fonction logique ET sur Z15 et Z17.
Bloc 74 :    Commutation en mode Poursuite si la valeur de Z15 est supérieure à TH15 et si la valeur de Z17 est inférieure à TH17.

En résumé, parmi les mots binaires générés dans le processus de traitement mis en oeuvre conformément à l'invention, les mots suivants ont une signification particulière :

Y3  qui représente la correction de phase moyenne;

Y5  qui représente la correction de phase cumulée au cours d'une procédure de poursuite en réponse à une erreur de phase;

X13 qui représente la correction de phase cumulée au cours d'une procédure de poursuite en réponse a une erreur de fréquence;

Z8  qui représente une estimation de la fréquence porteuse;

Z15 qui est une mesure de l'erreur de phase moyenne sur N1 N2 échantillons du signal reçu;

Z17 qui est une mesure de l'écart normal de l'erreur de phase.

Les mots binaires Y5 et X13 constituent les deux composantes du mot de correction de phase ω qui commande le déphaseur numérique 30 mentionné précédemment.

Le passage du mode Acquisition au mode Poursuite se fait automatiquement lorsque et uniquement lorsque les deux conditions suivantes sont remplies :

a) la valeur de Z15 est supérieure à un seuil entier positif fixé TH15, et
b) la valeur de Z17 est inférieure à un seuil entier positif fixé TH17.

Une faible valeur pour Z17 indique qu'un signal modulé est présent et que sa fréquence porteuse est située dans la bande d'acquisition de fréquences du circuit. De plus, lorsque Z15 passe d'une valeur négative à une valeur positive, cela indique que la valeur du mot Z8 (qui représente une estimation de la fréquence porteuse) a juste dépassé la fréquence porteuse du signal modulé reçu. Dès que ces deux conditions sont remplies, le circuit de reconstruction de la porteuse selon l'invention a la garantie que la fréquence porteuse correcte a été acquise, c'est-à-dire reconstituée automatiquement, et il se reconfigure lui-même automatiquement en mode poursuite. Tous les registres et accumulateurs du circuit, à l'exception de l'accumulateur qui produit Z8, se trouvent alors remis à zéro. Le processus décrit permet l'acquisition de la fréquence porteuse correcte même lorsque le signal entrant est modulé avec les données.

Le mode de réalisation exemplaire décrit dans ce qui précède est un exemple donné à titre illustratif et l'invention n'est nullement limitée à cet exemple.

## Revendications

1.  Démodulateur numérique pour démoduler un signal modulé par déplacement de phase à $\underline{m}$ états, comprenant un circuit d'échantillonnage et de quantification pour échantillonner et quantifier la composante en phase ($S_I$) et la composante en quadrature de phase ($S_Q$) du signal analogique modulé d'entrée et un circuit de reconstruction de la porteuse pour reconstruire la porteuse servant à démoduler le signal d'entrée, caractérisé en ce que le circuit d'échantillonnage et de quantification (10) comprend plusieurs (Na) étages de quantification d'amplitude recevant la composante en phase ($S_I$) du signal d'entrée et un ensemble de tensions de seuils (Vsi) différentes et plusieurs (Nb) étages de quantification de phase recevant la composante en quadrature de phase ($S_Q$) du signal d'entrée et un ensemble identique de tensions de seuils (Vsi) différentes, un circuit de logique combinatoire (15) pour convertir, une fois par période du signal d'horloge (Hs), les valeurs quantifiées ($K_I$, $K_Q$) des composantes en phase ($S_I$) et en quadrature de phase ($S_Q$) en deux valeurs entières ($\alpha$, $\gamma$) associées bijectivement à chaque ensemble de valeurs quantifiées ($K_I$, $K_Q$), et un circuit de réglage (16-18) pour comparer un signal binaire représentant la valeur quantifiée d'amplitude ($\alpha$) avec une valeur d'amplitude de référence ($\alpha o$) et pour produire un signal de sortie ($A_1$-A) servant au réglage dynamique des seuils de quantification (Vsi).

2.  Dispositif selon la revendication 1, caractérisé en ce que les tensions de seuils (Vsi) pour les étages de quantification d'amplitude et les étages de quantification de phase sont prélevées sur un diviseur de tension (13) unique.

3.  Dispositif selon la revendication 1 ou 2, caractérisé en ce que le nombre d'étages de quantification de phase (Np) est un multiple de quatre.

4.  Dispositif selon l'une quelconque des revendications précédentes, caractérisé en ce que le nombre de seuils de quantification d'amplitude (Vsi) est d'au moins seize.

5.  Dispositif selon l'une quelconque des revendications précédentes, caractérisé en ce qu'il comprend un déphaseur numérique (30) agencé pour recevoir un signal binaire représentant la valeur quantifiée de phase ($\gamma$) et un mot binaire ($\omega$) de correction de phase de manière à générer un mot binaire ($\delta$) représentant les échantillons quantifiés de la phase du signal reçu et après déphasage, les bits de plus fort poids (MSB) du mot binaire ($\delta$) contenant les données démodulées.

**6.** Dispositif selon la revendication 5, caractérisé en ce que les bits de plus faible poids (LSB) du mot binaire (δ) représentant les échantillons quantifiés de la phase du signal reçu et après déphasage sont appliqués à l'entrée d'un circuit de reconstruction de la porteuse (40) agencé pour traiter lesdits bits (LSB) afin de générer le mot de correction de phase (ω) précité.

**7.** Dispositif selon l'une quelconque des revendications 5 et 6, caractérisé en ce que le mot de correction de phase (ω) est généré par addition d'un mot binaire (Y5) représentant la correction de phase cumulée au cours d'une procédure de poursuite en réponse à une erreur de phase et d'un mot binaire (X13) représentant la correction de phase cumulée au cours de la procédure de poursuite précitée en réponse à une erreur de fréquence.

**Patentansprüche**

**1.** Numerischer Demodulator zum Demodulieren eines modulierten Signals durch Phasenverschiebung in m Zustände, mit folgenden Merkmalen:
eine Abtast- und Quantifizierschaltung zum Abtasten und Quantifizieren der Komponente in Phase ($S_I$) und der Komponente in Quadratur der Phase ($S_Q$) des analogen modulierten Eingangssignals;
eine Wiedergewinnungsschaltung für den Träger, um den Träger erneut zu bilden, der zum Demodulieren des Eingangssignals dient,
dadurch gekennzeichnet, daß die Abtast- und Quantifizierschaltung (10) folgendes umfaßt:
mehrere (Na) Stufen der Quantifikation der Amplitude mit Empfang der Komponente in Phase ($S_I$) des Eingangssignals und eine Gesamtheit von unterschiedlichen Schwellwertspannungen (Vsi) sowie mehreren (Nb) Quantifizierstufen der Phase mit Empfang der Komponente in Quadratur der Phase ($S_Q$) des Eingangssignals sowie eine identische Gesamtheit der unterschiedlichen Schwellwertspannungen (Vsi),
eine logische Kombinationsschaltung (15), um während einer Taktsignalperiode (Hs) die quantifizierten Werte ($K_I$, $K_Q$) der Komponente in Phase ($S_I$) und in Quadratur der Phase ($S_Q$) in zwei ganzzahlige Werte ($\alpha$, $\gamma$) umzuwandeln, die eindeutig der jeweiligen Gesamtheit der quantifizierten Werte ($K_I$, $K_Q$) zugeordnet sind, und ein Regelkreis (16-18), um ein binäres, den quantifizierten Amplitudenwert ($\alpha$) darstellendes Signal mit dem Bezugsamplitudenwert ($\alpha 0$) zu vergleichen und ein Ausgangssignal ($A_1$-A) zu erzeugen, das zur dynamischen Regelung der Quantifizierschwellwerte (Vsi) dient.

**2.** Vorrichtung nach Anspruch 1, dadurch gekennzeichnet, daß die Schwellwerte (Vsi) für die Quantifizierstufen der Amplitude und der Quantifizierstufen der Phase von einem einzigen Spannungsteiler (13) abgegriffen werden.

**3.** Vorrichtung nach Anspruch 1 oder 2, dadurch gekennzeichnet, daß die Anzahl der Quantifizierstufen der Phase (Np) eine Vielzahl von vier ist.

**4.** Vorrichtung nach einem der vorhergehenden Ansprüche, dadurch gekennzeichnet, daß die Anzahl der Quantifizierschwellen der Amplitude (Vsi) mindestens 16 beträgt.

**5.** Vorrichtung nach einem der vorhergehenden Ansprüche, dadurch gekennzeichnet, daß sie einen numerischen Phasenschieber (30) umfaßt, der zum Empfang eines binären, den quantifizierten Phasenwert ($\gamma$) darstellenden Signal und eines binären Phasenkorrektursignals ($\gamma$) in der Weise betätigt wird, daß ein binäres Wort ($\delta$) erzeugt wird, welches die quantifizierten Abtastwerte der Phase des empfangenen Signals und danach der Phasenverschiebung darstellt, wobei die Bits mit der schwersten Gewichtigkeit (MSB) des binären Wortes ($\delta$) die demodulierten Daten enthalten.

**6.** Vorrichtung nach Anspruch 5, dadurch gekennzeichnet, daß die Bits mit der geringsten Gewichtigkeit (LSB) des binären Wortes ($\delta$), welche die quantifizierten Abtastwerte der Phase des empfangenen Signals und danach die Phasenverschiebung darstellen, am Eingang der Wiedergewinnungsschaltung des Trägers (40) angelegt werden, der zur Behandlung dieser Bits (LSB) betrieben wird, um das vorerwähnte Phasenkorrekturwort (ω) zu erzeugen.

**7.** Vorrichtung nach einem der Ansprüche 5 oder 6, dadurch gekennzeichnet, daß das Phasenkorrekturwort (ω) durch die Addition eines binären Wortes (Y5), welches die kumulierte Phasenkorrektur im Verlauf des Verfahrens der Verfolgung in Abhängigkeit eines Phasenfehlers darstellt, und eines binären Wortes (X13) erzeugt wird, welches die kumulierte Phasenkorrektur im Verlauf der vorerwähnten Verfolgung in Abhängigkeit von einem Frequenzfehler darstellt.

**Claims**

**1.** A digital demodulator for the demodulation of a m-phase shift keying modulated signal comprising a sampling and quantization circuit for sampling and quantizing the in-phase ($S_I$) and the in-quadrature ($S_Q$) components of the modulated analog input signal and a carrier recovery circuit for reconstructing the carrier serving for demodulating the input signal, characterized in that the sampling and quantization circuit (10) comprises a plurality (Na) of amplitude quantization steps, whereby each step receives the in-phase component $(S_I)$ of the input signal and a set of different threshold voltages (Vsi), and a plurality (Nb) of amplitude quantization steps, whereby each step reveives the in-quadrature component $(S_Q)$ of the input signal and an identical set of different threshold voltages (Vsi), a combinational logic circuit (15) for converting once per clock period (Hs), the quantized values $(K_I, K_Q)$ of the in-phase $(S_I)$ and in-quadrature $(S_Q)$ components into two integer values $(\alpha, \gamma)$ deterministically associated to each set of quantized values $(K_I, K_Q)$; and an adjusting circuit (16-18) for comparing a binary signal representing the quantized amplitude value $(\alpha)$ with a reference amplitude value $(\alpha o)$ and for generating an output signal $(A_1-A)$ for the dynamic control of the quantization thresholds (Vsi).

2. An apparatus according to claim 1, characterized in that the threshold voltages (Vsi) for the amplitude quantization steps and the phase quantization steps are taken from a single voltage divider (13).

3. An apparatus according to claim 1 or 2, characterized in that the number of phase quantization steps (Np) is a multiple of four.

4. An apparatus according to any of the preceding claims, characterized in that the number of amplitude quantization thresholds (Vsi) is at least sixteen.

5. An apparatus according to any of the preceding claims, characterized by comprising a digital phase-shifter (30) arranged to receive a binary signal representing the quantized phase value $(\gamma)$ and a binary phase correction word $(\omega)$ to generate a binary word $(\delta)$ representing the quantized phase samples of the received signal and wherein, after phase-shifting, the most significant bits (MSB) of the binary word $(\delta)$ correspond to the demodulated data.

6. An apparatus according to claim 5, characterized in that the least significant bits (LSB) of the binary word $(\delta)$ represent the quantized phase samples of the received signal and, after phase-shifting, are applied to the input of a carrier recovery circuit (40) arranged to processing said bits (LSB) in order to generate said phase correction word $(\omega)$.

7. An apparatus according to any of claims 5 and 6, characterized in that the phase correction word $(\omega)$ is generated by adding a binary word (Y5) representing the phase correction cumulated during a tracking process in response to a phase error and a binary word (X13) representing the phase correction cumulated during said tracking process in response to a

frequency error.

FIG. 1

FIG. 3

FIG. 2

EP 0 459 968 B1

F I G. 4